# EUROPEAN PATENT APPLICATION

(11) **EP 4 730 526 A1**
(43) Date of publication of application: **22.04.2026**
(21) Application number: 24884136.3
(22) Date of filing: 15.08.2024
(51) Int. Cl.: H01M 50/244

(54) **BEAM STRUCTURE OF BATTERY, BATTERY AND ELECTRIC DEVICE**

(30) Priority: 01.11.2023 CN 202322953564 U
(71) Applicant: Contemporary Amperex Technology Co., Limited, Ningde, Fujian 352100 (CN)
(72) Inventor: WU, Kai, Ningde, Fujian 352100 (CN); YANG, Hui, Ningde, Fujian 352100 (CN); ZHAO, Wenwen, Ningde, Fujian 352100 (CN)
(74) Representative: Kraus & Lederer PartGmbB
(86) International application number: PCT/CN2024/112441
(87) International publication number: WO 2025/092129

(57) **Abstract**

The present application relates to the technical field of batteries. Disclosed are a beam structure of a battery, a battery and an electric device. The beam structure comprises: a mounting member, which is provided with a first mounting position where a high-voltage control element is mounted; and an expansion beam, which is provided with a second mounting position where the high-voltage control element and a connecting terminal of a battery cell group are mounted, at least part of the expansion beam being connected to the mounting member into one piece.

## Description

### CROSS-REFERENCE TO RELATED APPLICATION

The present application is presented based on Chinese Patent Application No. 202322953564.4 filed on November 1, 2023, and claims the priority to the Chinese Patent Application, the content of which is incorporated herein by reference in its entirety.

### TECHNICAL FIELD

The present application relates to the technical field of batteries, and in particular, to a beam structure of a battery, a battery, and an electric device.

### BACKGROUND

In a general battery, the mounting plate for a switch box is assembled on the case by welding, and the connection terminal of the battery cell group is mounted on the expansion beam. The expansion beam is also assembled on the case by welding, and the two components are connected via a rigid aluminum busbar. Due to deviations caused by multiple welding operations on the expansion beam and the mounting plate, poor assembly of the rigid aluminum busbar may easily occur, thereby reducing production efficiency.

### SUMMARY

The present application provides a beam structure of a battery, a battery, and an electric device, so as to address the issue that multiple welding operations on the mounting plate of the existing switch box and the expansion beam may easily lead to poor assembly of the rigid aluminum busbar.

In a first aspect, embodiments of the present application provide a beam structure of a battery, a battery, and an electric device. The beam structure of a battery includes:
a mounting member, the mounting member being provided with a first mounting position configured to mount a switch box; and
an expansion beam, the expansion beam being provided with a second mounting position configured to mount a connection terminal of a battery cell group, where at least a portion of the expansion beam is connected to the mounting member to form an integrated member.

In the above technical solution, since the mounting member and at least a portion of the expansion beam are connected to form an integrated member, the relative position between the first mounting position on the mounting member and the second mounting position on the expansion beam is fixed. In subsequent assembly, the connection of a rigid aluminum busbar between the switch box and the connection terminal of the battery cell group is facilitated, thereby reducing the probability of poor assembly of the rigid aluminum busbar caused by multiple welding assemblies, and improving production efficiency and product quality.

In some embodiments, the expansion beam includes:
a beam body, the beam body being provided with a cavity, and the second mounting position being provided on the beam body; and
a reinforcing plate, the reinforcing plate being disposed within the cavity and being connected to the beam body,
where one of the beam body and the reinforcing plate is connected to the mounting member to form an integrated structure.

In the above technical solution, the reinforcing plate is provided to enhance the structural strength of the expansion beam, and one of the reinforcing plate and the beam body is connected to the mounting member to form an integrated structure, such that the probability of misalignment of the first mounting position and the second mounting position caused by multiple welding operations is reduced.

In some embodiments, the beam body includes a first beam body and a second beam body, the first beam body is disposed on a side proximal to the mounting member relative to the second beam body, upper portions of the first beam body and the second beam body are connected and jointly define a cavity with an open lower end, a first portion of the reinforcing plate is located within the cavity and connected to the first beam body and the second beam body, and a second portion of the reinforcing plate extends out from the lower end of the cavity so as to be connected to the mounting member to form an integrated member.

In the above technical solution, by providing the first beam body and the second beam body, the assembly of the beam body and the reinforcing plate is facilitated. The structure of the reinforcing plate is simple, and by arranging the second portion of the reinforcing plate to be connected to the mounting member to form an integrated structure, the production and processing are simple, thereby reducing production cost.

In some embodiments, the first portion includes a plurality of reinforcing segments and supporting segments that are arranged in an up-down direction, two adjacent reinforcing segments are connected to the first beam body and the second beam body, respectively, the supporting segment is connected between the two adjacent reinforcing segments, and one of the supporting segments that is located at a lowermost end is connected to the second portion.

In the above technical solution, by providing the plurality of reinforcing segments and supporting segments, the reinforcing plate is supported between the first beam body and the second beam body, and a plurality of frame structures are formed, thereby enhancing the structural strength of the expansion beam.

In some embodiments, a lower end of the first beam body is provided with a flange extending in a direction close to the mounting member, and the flange is connected to the second portion.

In the above technical solution, by arranging the flange to be connected to the second portion, the overall structural strength of the expansion beam is enhanced.

In some embodiments, the second portion is provided with a plurality of mounting holes, and the flange is provided with a plurality of clearance grooves at positions corresponding to the plurality of mounting holes.

In the above technical solution, by providing the plurality of mounting holes and the plurality of clearance grooves, the mounting of components such as a battery management system (BMS) and a battery management unit (BMU) is facilitated.

In some embodiments, an upper end of the first beam body is provided with a first groove, an upper end of the second beam body is provided with a second groove, and the first groove and the second groove define the second mounting position.

In the above technical solution, by arranging the first groove and the second groove to define the second mounting position, the assembly of an output electrode is facilitated.

In some embodiments, the first beam body is provided with a concave-convex structure.

In the above technical solution, by providing the concave-convex structure on the first beam body, the structural strength of the first beam body is enhanced.

In some embodiments, the mounting member includes:
a main plate body, where the first mounting position is provided on the main plate body;
a bent portion, where one end of the bent portion is connected to a side portion of the main plate body in a bending manner, and another end of the bent portion is connected to the expansion beam to form an integrated member; and
a support leg, where the support leg is connected to the side portion of the main plate body, and the support leg is configured to be connected to a case of the battery.

In the above technical solution, by providing the bent portion, the connection of the mounting member to the expansion beam to form an integrated structure is facilitated, and by providing the support leg, the mounting member is fixedly connected to the case of the battery.

In some embodiments, the bent portion is bent downward from a side edge of the main plate body facing the expansion beam, an upper end of the support leg is connected to the main plate body, and a lower end of the support leg is configured to be connected to the case of the battery.

In the above technical solution, by providing the bent portion and the support leg, the main plate body is spaced apart from the case of the battery, thereby facilitating the assembly of the switch box at the first mounting position.

In a second aspect, the embodiments of the present application provide a battery. The battery includes:
a case;
the beam structure according to any one of the solutions in the first aspect, mounted within the case;
a switch box mounted at the first mounting position;
an output electrode mounted at the second mounting position; and
a battery cell group mounted within the case, where a connection terminal of the battery cell group is electrically connected to the switch box via the output electrode.

In the above technical solution, since the mounting member and at least a portion of the expansion beam are connected to form an integrated member, the relative position between the first mounting position on the mounting member and the second mounting position on the expansion beam is fixed. In subsequent assembly, the connection of a rigid aluminum busbar among the switch box, the connection terminal of the battery cell group, and the output electrode is facilitated, thereby reducing the probability of poor assembly of the rigid aluminum busbar caused by multiple welding assemblies, and improving production efficiency and battery quality.

In a third aspect, the embodiments of the present application provide an electric device. The electric device includes:
the battery according to the second aspect, where the battery is configured to supply power to the electric device.

In the above technical solution, since the mounting member and at least a portion of the expansion beam are connected to form an integrated member, the relative position between the first mounting position on the mounting member and the second mounting position on the expansion beam is fixed. In subsequent assembly, the connection of a rigid aluminum busbar among the switch box, the connection terminal of the battery cell group, and the output electrode is facilitated, thereby reducing the probability of poor assembly of the rigid aluminum busbar caused by multiple welding assemblies, improving production efficiency and battery quality, and assisting in improving the stability of the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural view of a vehicle according to some embodiments of the present application;
FIG. 2 is an exploded view of the structure of a battery according to some embodiments of the present application;
FIG. 3 is a first schematic partial structure view of a battery according to some embodiments of the present application;
FIG. 4 is a partially enlarged view of the portion A in FIG. 3;
FIG. 5 is a second schematic partial structure view of a battery according to some embodiments of the present application;
FIG. 6 is a partially enlarged view of the portion B in FIG. 5;
FIG. 7 is a third schematic partial structure view of a battery according to some embodiments of the present application;
FIG. 8 is a schematic structural view of a beam structure according to some embodiments of the present application; and
FIG. 9 is a schematic partial structure view of a beam structure according to some embodiments of the present application.

### Reference numerals:

vehicle 1, battery 10, motor 20, controller 30;
case 11; first case body 111; second case body 112;
battery cell group 12, battery cell 121, output end 122;
beam structure 13, mounting member 131, first mounting position 1310, main plate body 1311, bent portion 1312, support leg 1313, expansion beam 132, second mounting position 1320, beam body 1321, first beam body 13211, flange 13212, second beam body 13213, reinforcing plate 1322, first portion 13221, reinforcing segment 13222, supporting segment 13223, second portion 13224;
switch box 14;
output electrode 15;
rigid aluminum busbar 16.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the described embodiments of the present application can be combined with other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

The term "plurality of" used in the present application refers to two or more (including two). Similarly, "plurality of groups" refers to two or more (including two) groups, and "plurality of pieces" refers to two or more (including two) pieces.

The battery cells mentioned in the embodiments of the present application may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. The battery generally includes a case used for encapsulating one or a plurality of battery cells or a plurality of battery module groups. The case can reduce the influence of liquid or other foreign matters on the charging or discharging process of the battery cells.

The battery cell includes a shell, an electrode assembly, and an electrolyte, and the shell is configured to accommodate the electrode assembly and the electrolyte. The electrode assembly consists of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together.

The material of the separator may be polypropylene (PP), polyethylene (PE), or the like. In addition, the electrode assembly may be of a winding structure or a stacked structure, but the embodiments of the present application are not limited thereto.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements both in terms of safety and cycle service life.

In a general battery, the mounting plate for a switch box (S-BOX) is assembled on the case by welding, and the connection terminal of the battery cell group is mounted on the expansion beam via an output electrode. The expansion beam is also assembled on the case by welding, and the two components are connected via a rigid aluminum busbar. Since the expansion beam and the mounting plate are separately assembled with the case of the battery by welding, assembly errors may occur during the welding process. The accumulation of deviations caused by multiple welding operations may easily result in misalignment during the subsequent assembly of the rigid aluminum busbar, thereby causing poor assembly of the rigid aluminum busbar and reducing production efficiency.

In view of the above, to address the issue that multiple welding operations on the mounting plate of the existing switch box and the expansion beam may easily lead to poor assembly of the rigid aluminum busbar, in the present application, a beam structure of a battery is designed. The beam structure includes a mounting member and an expansion beam. The mounting member is provided with a first mounting position configured to mount a switch box. The expansion beam is provided with a second mounting position configured to mount the switch box and the connection terminal of a battery cell group, and at least a portion of the expansion beam is connected to the mounting member to form an integrated member.

In the beam structure of a battery having such a configuration, since the mounting member and at least a portion of the expansion beam are connected to form an integrated member, the relative position between the first mounting position on the mounting member and the second mounting position on the expansion beam is fixed. In subsequent assembly, the connection of a rigid aluminum busbar between the switch box and the connection terminal of the battery cell group is facilitated, thereby reducing the probability of poor assembly of the rigid aluminum busbar caused by multiple welding assemblies, and improving production efficiency and product quality.

The battery disclosed in the embodiments of the present application may, but is not limited to, be used in electric devices such as vehicles, ships, or aircraft. The power system of the electric device may be configured using the battery thermal management system, the battery, and the like disclosed in the present application, thereby facilitating expansion of the application scope of the battery thermal management system and reducing the assembly complexity of the battery thermal management system.

The embodiments of the present application provide an electric device using a battery as a power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1 as an example of the electric device according to an embodiment of the present application.

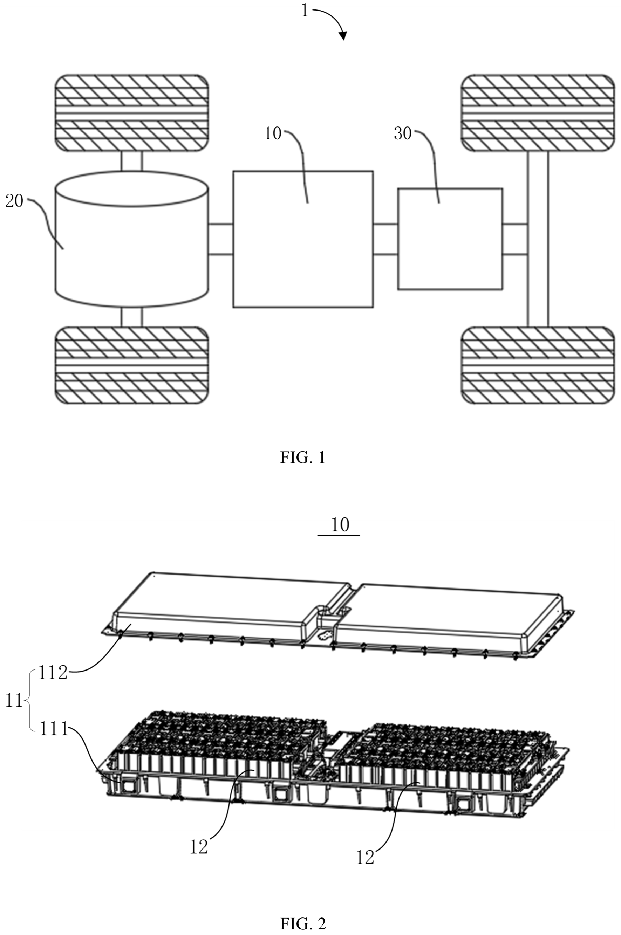

As shown in FIG. 1, a schematic structural view of a vehicle 1 according to one embodiment of the present application, the vehicle 1 may be a fuel vehicle, a gas vehicle, or a new energy vehicle. The new energy vehicle may be a pure electric vehicle, a hybrid vehicle, or an extended-range vehicle. A motor 20, a controller 30, and a battery 10 may be disposed inside the vehicle 1. The controller 30 is configured to control the battery 10 to supply power to the motor 20. For example, the battery 10 may be disposed at the bottom, front, or rear of the vehicle 1. The battery 10 may be used to supply power to the vehicle 1. For example, the battery 10 may serve as an operation power source for the vehicle 1 and is used in a circuit system of the vehicle 1, for example, for operation power needed for starting, navigating, and driving of the vehicle 1. In another embodiment of the present application, the battery 10 may not only serve as an operation power source for the vehicle 1, but also serve as a driving power source for the vehicle 1 to, instead of or in part instead of fuel or natural gas, provide driving power for the vehicle 1.

To meet different power usage requirements, the battery 10 may include a plurality of battery cells 121. The plurality of battery cells 121 may be connected in series, in parallel, or in series-parallel to form a battery cell group. The series-parallel connection refers to a combination of series connection and parallel connection.

As shown in FIG. 2, an exploded view of the structure of a battery 10 according to one embodiment of the present application, the battery 10 includes a case 11 and a plurality of battery cells 121. The battery cells 121 are configured to be accommodated in the case 11. The case 11 is configured to provide an assembly space for the battery cells 121, and the case 11 may be in various structures. In some embodiments, the case 11 may include a first case body 111 and a second case body 112. The first case body 111 and the second case body 112 are mutually lidded with each other. The first case body 111 and the second case body 112 jointly define an assembly space for accommodating the battery cells 121. The second case body 112 may be of a hollow structure with one end open, and the first case body 111 may be of a plate-shaped structure. The first case body 111 lids the open side of the second case body 112, such that the first case body 111 and the second case body 112 jointly define an assembly space; the first case body 111 and the second case body 112 may also both be of a hollow structure with one side open, and the open side of the first case body 111 lids the open side of the second case body 112. Certainly, the case 11 formed by the first case body 111 and the second case body 112 may be in various shapes, such as a cylinder and a rectangular parallelepiped.

In the battery 10, the plurality of battery cells 121 may be connected in series, in parallel, or in series-parallel. The series-parallel connection means that both series connection and parallel connection are present for the connection among the plurality of battery cells 121. The plurality of battery cells 121 may be directly connected in series, in parallel, or in series-parallel, and then the whole formed by the plurality of battery cells 121 is accommodated in the case 11. Certainly, the situation may be that in the battery 10, the plurality of battery cells 121 are first connected in series, in parallel, or in series-parallel to form battery modules, and then the plurality of battery modules are connected in series, in parallel, or in series-parallel to form a whole and accommodated in the case 11. The battery 10 may further include other structures. For example, the battery 10 may further include a busbar component for achieving electrical connection among the plurality of battery cells 121.

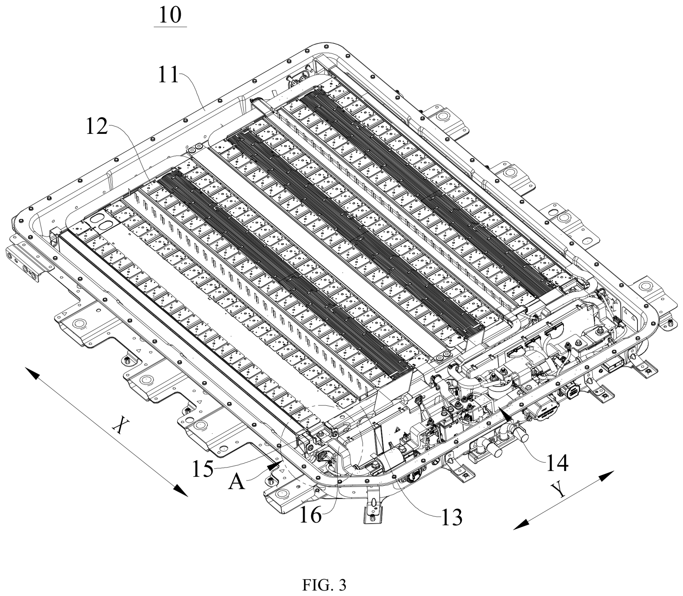

Referring to FIG. 3, FIG. 3 is a schematic partial structure view of a battery 10 according to some embodiments of the present application. The battery 10 includes a plurality of rows of battery cells 121. The plurality of rows of battery cells 121 are arranged in a first direction X. Each row of battery cells 121 includes a plurality of battery cells 121 arranged in a second direction Y. The first direction X and the second direction Y are the length direction of the case 11 and the width direction of the case 11, respectively, and the first direction X and the second direction Y are perpendicular to each other.

Each battery cell 121 may be a secondary battery or a primary battery; it may also be a lithium-sulfur battery, a sodium-ion battery, or a magnesium-ion battery, but is not limited thereto. The battery cell 121 may be cylindrical, flat, rectangular parallelepiped-shaped, or in other shapes. Illustratively, in FIG. 3, the battery cell 121 is in the shape of a rectangular parallelepiped.

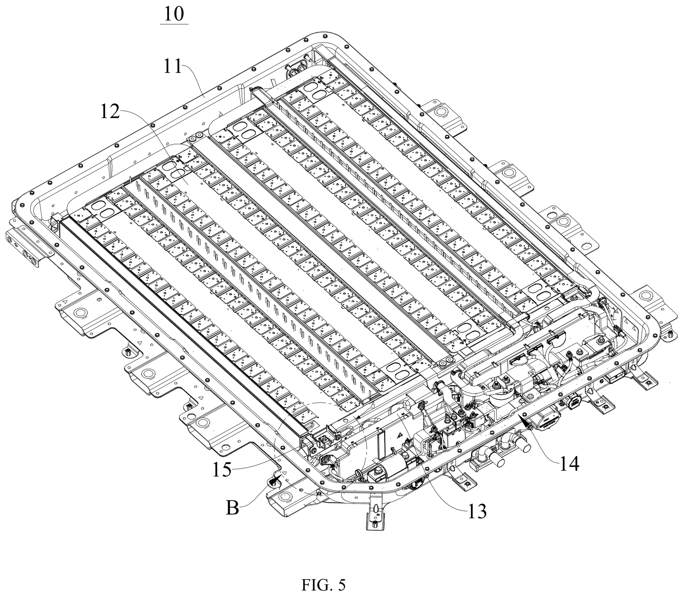

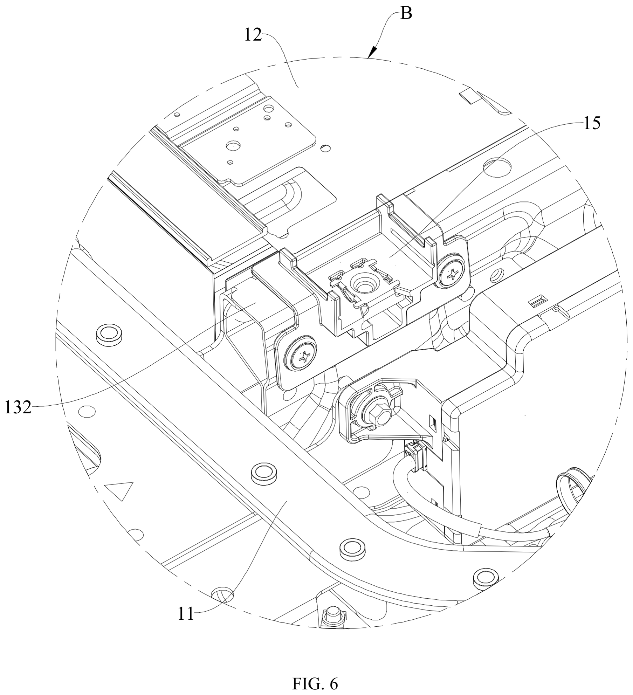

Referring to FIGs. 3 to 7, according to some embodiments of the present application, the present application provides a battery 10. The battery 10 may include a case 11, a beam structure 13, a switch box 14, an output electrode 15, and a battery cell group 12.

For the case 11, reference may be made to the above technical solutions, and the details are not described herein again.

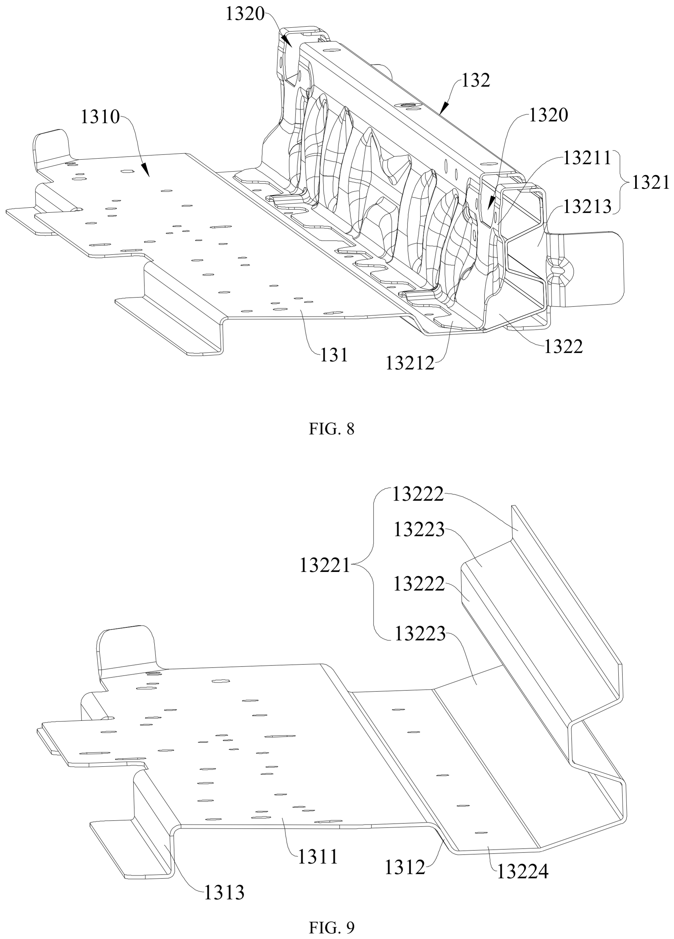

Referring to FIGs. 8 and 9, according to some embodiments of the present application, the present application further provides a beam structure 13 of a battery 10. The beam structure 13 may be mounted within the case 11 and may be connected to the case 11 by welding. The beam structure 13 may include a mounting member 131 and an expansion beam 132.

The mounting member 131 may be provided with a first mounting position 1310 configured to mount a switch box 14.

The switch box 14 may be an integrally configured high-voltage control box or may be composed of a plurality of electrical elements, such as a fuse, a resistor, a high-voltage relay, and a printed circuit board assembly (PCBA), that are mounted on the beam structure 13. In this implementation, the first mounting position 1310 may be provided with a plurality of assembly holes, and the plurality of electrical elements of the switch box 14 may be mounted in the plurality of assembly holes of the first mounting position 1310 so as to be fixedly connected to the mounting member 131.

The expansion beam 132 may be provided with a second mounting position 1320, and the second mounting position 1320 can be configured to mount the connection terminal of a battery cell group 12.

In this implementation, the battery cell group 12 is mounted within the case 11, and may be mounted on a side of the expansion beam 132 facing away from the mounting member 131 and abut against the expansion beam 132. The battery cell group 12 may consist of a plurality of battery cell groups 12. The battery cells 121 may generate heat and expand during the working process, and the expansion beam 132 can effectively resist the expansion force generated by the battery cells 121.

The output electrode 15 may be mounted at the second mounting position 1320, and the connection terminal of the battery cell group 12 may be electrically connected to the switch box 14 via the output electrode 15.

The connection terminal of the battery cell group 12 may include an output end 122 and an input end of the battery cell group 12. The electrode terminals of two battery cells 121 located at both ends of the battery cell group 12 are provided with an output end 122 and an input end, respectively. The output end 122 and the input end can be configured to electrically connect the battery cell group 12 to the outside. In this implementation, the output end 122 and the input end of the battery cell group 12 are disposed proximal to the expansion beam 132 and extend to the second mounting position 1320, such that the output end 122 and the input end of the battery cell group 12 can be electrically connected to the switch box 14 via the output electrode 15, separately.

Referring to FIG. 8, it can be understood that the beam structure 13 may be provided with at least two second mounting positions 1320, and at least two output electrodes 15 may be provided. The two output electrodes 15 are correspondingly mounted at the two second mounting positions 1320, and the two output electrodes 15 are configured to be connected to the output end 122 and the input end of the battery cell group 12, respectively.

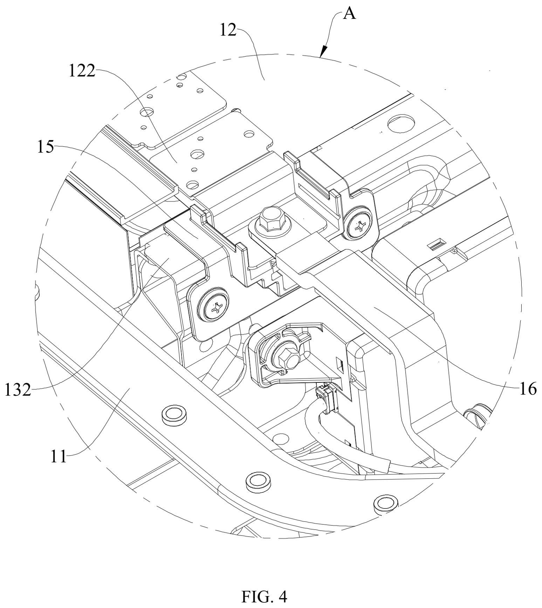

Specifically, referring to FIGs. 3 and 4, the battery 10 may further include a rigid aluminum busbar 16. The rigid aluminum busbar 16 is a rigid aluminum connecting member, and the rigid aluminum busbar 16 may be connected between the output electrode 15 and the switch box 14. Taking the output end 122 of the battery cell group 12 as an example, one end of the rigid aluminum busbar 16 is fixedly connected to the fuse of the switch box 14, and the other end of the rigid aluminum busbar 16 is fixedly connected to the output end 122 of the battery cell group 12 and the output electrode 15 via bolts, thereby enabling the output end 122 of the battery cell group 12 to be electrically connected to the switch box 14.

At least a portion of the expansion beam 132 can be connected to the mounting member 131 to form an integrated member.

In this implementation, at least a portion of the expansion beam 132 can be connected to the mounting member 131 to form an integrated member, such that the mounting member 131 and the expansion beam 132 are formed into an integrated structure. During actual production, the mounting member 131 and the expansion beam 132 constitute an integrated beam structure 13 and are then mounted into the case 11, thereby reducing errors that may be introduced when the expansion beam 132 and the mounting member 131 are separately welded to the case 11.

Specifically, in this implementation, at least a portion of the expansion beam 132 and the mounting member 131 may be configured as an integrated member made of the same material, and are manufactured through integral forming during the production process. Illustratively, the integrated member may be manufactured by stamping and cutting an entire metal sheet.

In another implementation, the expansion beam 132 and the mounting member 131 may be further made of different materials. Illustratively, the expansion beam 132 may be made of a metal material, and the mounting member 131 may be made of a plastic material. Through integral injection molding, the mounting member 131 and at least a portion of the expansion beam 132 are manufactured into an integrated member.

In actual implementation, the mounting member 131 and at least a portion of the expansion beam 132 are manufactured into an integrated structure, and then the mounting member 131 and the expansion beam 132 are together mounted within the case 11. Even though errors are generated during the welding process, the relative position between the first mounting position 1310 on the mounting member 131 and the second mounting position 1320 on the expansion beam 132 is stable, and the first mounting position and the second mounting position are not prone to deformation. After the switch box 14 and the output electrode 15 are mounted at the first mounting position 1310 and the second mounting position 1320, respectively, the relative position between the two is stable, facilitating the subsequent connection of the rigid aluminum busbar 16.

According to the beam structure 13 of the embodiments of the present application, since the mounting member 131 and at least a portion of the expansion beam 132 are connected to form an integrated member, the relative position between the first mounting position 1310 on the mounting member 131 and the second mounting position 1320 on the expansion beam 132 is fixed. In subsequent assembly, the connection of the rigid aluminum busbar 16 between the switch box 14 and the connection terminal of the battery cell group 12 is facilitated, thereby reducing the probability of poor assembly of the rigid aluminum busbar 16 caused by multiple welding assemblies, and improving production efficiency and product quality.

According to the battery 10 of the embodiments of the present application, since the mounting member 131 and at least a portion of the expansion beam 132 are connected to form an integrated member, the relative position between the first mounting position 1310 on the mounting member 131 and the second mounting position 1320 on the expansion beam 132 is fixed. In subsequent assembly, the connection of the rigid aluminum busbar 16 between the switch box 14 and the connection terminal of the battery cell group 12 is facilitated, thereby reducing the probability of poor assembly of the rigid aluminum busbar 16 caused by multiple welding assemblies, and improving production efficiency and the quality of the battery 10.

Referring to FIGs. 8 and 9, according to some embodiments of the present application, the expansion beam 132 may include a beam body 1321 and a reinforcing plate 1322.

The beam body 1321 may be provided with a cavity, the second mounting position 1320 may be provided on the beam body 1321, and the reinforcing plate 1322 may be disposed within the cavity and connected to the beam body 1321. One of the beam body 1321 and the reinforcing plate 1322 may be connected to the mounting member 131 to form an integrated structure.

In this implementation, the expansion beam 132 may include a beam body 1321, and the beam body 1321 may be of a structure having a cavity, thereby facilitating energy absorption by the expansion beam 132 and enhancing structural strength. The second mounting position 1320 may be provided on the beam body 1321, such that the structure of the second mounting position 1320 is stable and not prone to deformation, and the mounting position is relatively accurate. The reinforcing plate 1322 may be disposed within the cavity and connected to the beam body 1321. By arranging the reinforcing plate 1322 within the cavity, the overall structural strength of the expansion beam 132 is enhanced, thereby better bearing the expansion force generated by the battery cell 121.

One of the beam body 1321 and the reinforcing plate 1322 may be connected to the mounting member 131 to form an integrated structure. By connecting either of the beam body 1321 and the reinforcing plate 1322 to the mounting member 131 to form an integrated structure, the mounting member 131 can be integrated with the expansion beam 132, facilitating subsequent assembly processes. For the specific connection manner, reference may be made to the embodiments described below.

According to the beam structure 13 of the embodiments of the present application, the reinforcing plate 1322 is provided to enhance the structural strength of the expansion beam 132, and one of the reinforcing plate 1322 and the beam body 1321 is connected to the mounting member 131 to form an integrated structure, such that the probability of misalignment of the first mounting position 1310 and the second mounting position 1320 caused by multiple welding operations is reduced.

Referring to FIG. 8, according to some embodiments of the present application, the beam body 1321 may include a first beam body 13211 and a second beam body 13213. The first beam body 13211 is disposed on a side proximal to the mounting member 131 relative to the second beam body 13213. The upper portions of the first beam body 13211 and the second beam body 13213 may be connected and jointly define a cavity with an open lower end.

In this implementation, the beam body 1321 is configured to include a first beam body 13211 and a second beam body 13213, so as to facilitate the mounting of the reinforcing plate 1322 within the cavity and the fixed connection of the reinforcing plate with the first beam body 13211 and the second beam body 13213. The first beam body 13211 is disposed on a side proximal to the mounting member 131 relative to the second beam body 13213, and the second beam body 13213 is configured to abut against the battery cell group 12. The upper portions of the first beam body 13211 and the second beam body 13213 are bent toward a direction close to each other and are connected by welding, such that the first beam body 13211 and the second beam body 13213 are fixedly connected and define a cavity with an open lower end.

The first portion 13221 of the reinforcing plate 1322 is located within the cavity and connected to the first beam body 13211 and the second beam body 13213, and the second portion 13224 of the reinforcing plate 1322 extends out from the lower end of the cavity so as to be connected with the mounting member 131 to form an integrated member.

In this implementation, the reinforcing plate 1322 may include a first portion 13221 and a second portion 13224, and the first portion 13221 may be mounted within the cavity and connected to the first beam body 13211 and the second beam body 13213, such that the first portion 13221 is supported between the first beam body 13211 and the second beam body 13213, thereby enhancing the structural strength of the expansion beam 132. The second portion 13224 of the reinforcing plate 1322 extends out from the lower end of the cavity and extends in the direction close to the mounting member 131 so as to be connected to the mounting member 131 to form an integrated member, thereby enabling the mounting member 131 to be integrated with the expansion beam 132. Since the structure of the reinforcing plate 1322 is relatively simple, the difficulty in integrating the reinforcing plate 1322 with the mounting member 131 can be reduced, thereby reducing production cost.

According to the beam structure 13 of the embodiments of the present application, by providing the first beam body 13211 and the second beam body 13213, the assembly of the beam body 1321 and the reinforcing plate 1322 is facilitated. The structure of the reinforcing plate 1322 is simple, and by arranging the second portion 13224 of the reinforcing plate 1322 to be connected to the mounting member 131 to form an integrated structure, the production and processing are simple, thereby reducing production cost.

Referring to FIGs. 8 and 9, particularly FIG. 9, according to some embodiments of the present application, the reinforcing plate 1322 may include a plurality of reinforcing segments 13222 and supporting segments 13223 that are arranged in an up-down direction. Two adjacent reinforcing segments 13222 may be connected to the first beam body 13211 and the second beam body 13213, respectively. The supporting segment 13223 may be connected between the two adjacent reinforcing segments 13222, and one supporting segment 13223 located at the lowermost end may be connected to the second portion 13224.

In this implementation, the reinforcing plate 1322 may include a plurality of reinforcing segments 13222 and supporting segments 13223. The plurality of reinforcing segments 13222 are arranged in an up-down direction, and two adjacent reinforcing segments 13222 are connected to the first beam body 13211 and the second beam body 13213, respectively. Specifically, the reinforcing segments 13222 may be connected to the first beam body 13211 or the second beam body 13213 by welding, to enable the reinforcing plate 1322 to be connected to the first beam body 13211 and the second beam body 13213 to form an integrated structure. The plurality of supporting segments 13223 may be arranged in the up-down direction, and the supporting segment 13223 is connected between two adjacent reinforcing segments 13222, such that the supporting segment 13223 is supported between the first beam body 13211 and the second beam body 13213. Therefore, a plurality of cavities in a frame structure are formed between the first beam body 13211, the second beam body 13213, the reinforcing segments 13222, and the supporting segments 13223, and the structural stability of the frame structure is stronger, thereby enhancing the overall structural strength of the expansion beam 132.

One supporting segment 13223 located at the lowermost end may be connected to the second portion 13224. In this implementation, to ensure the rationality and strength of the overall structure design, one of the plurality of reinforcing segments 13222 that is located at the lowermost end is connected to the second beam body 13213, one end of the supporting segment 13223 located at the lowermost end is connected to the reinforcing segment 13222 at the lowermost end, and the other end is connected to the second portion 13224.

According to the beam structure 13 of the embodiments of the present application, by providing the plurality of reinforcing segments 13222 and supporting segments 13223, the reinforcing plate 1322 is supported between the first beam body 13211 and the second beam body 13213, and a plurality of frame structures are formed, thereby enhancing the structural strength of the expansion beam 132.

Referring to FIG. 8, according to some embodiments of the present application, the lower end of the first beam body 13211 may be provided with a flange 13212 extending in a direction close to the mounting member 131, and the flange 13212 may be connected to the second portion 13224.

In this implementation, the lower end of the first beam body 13211 may be provided with the flange 13212 extending in the direction close to the mounting member 131, and the flange 13212 is located on the upper side of the second portion 13224 and attached to the second portion 13224. By connecting the flange 13212 to the second portion 13224, the connection strength between the first beam body 13211 and the reinforcing plate 1322 is improved, thereby enhancing the structural strength of the entire expansion beam 132.

Referring to FIG. 8, according to some embodiments of the present application, the second portion 13224 is provided with a plurality of mounting holes, and the flange 13212 is provided with a plurality of clearance grooves at positions corresponding to the plurality of mounting holes.

In this implementation, the second portion 13224 may be provided with a plurality of mounting holes, and the plurality of mounting holes may be spaced apart from each other in the length direction of the expansion beam 132. In subsequent assembly, clinch studs may be mounted in the mounting holes, and a plurality of clearance grooves may be formed on the flange 13212 at positions corresponding to the plurality of mounting holes to accommodate the clinch studs. By providing the clinch studs, the mounting of components such as a battery management system (BMS) of the battery 10 and a battery management unit (BMU) of the battery 10 is facilitated.

Referring to FIG. 8, according to some embodiments of the present application, the upper end of the first beam body 13211 may be provided with a first groove, the upper end of the second beam body 13213 may be provided with a second groove, and the first groove and the second groove can define the second mounting position 1320.

In this implementation, the output electrode 15 may include a mounting base and a threaded hole. To facilitate the assembly of the output electrode 15, the upper end of the first beam body 13211 may be provided with a first groove, and the upper end of the second beam body 13213 may be provided with a second groove. The first groove and the second groove jointly define the second mounting position 1320, such that the mounting base of the output electrode 15 can be mounted within the second mounting position 1320. Two sides of the first groove may be further provided with through holes, to enable the mounting base of the output electrode 15 to be fixed on the first beam body 13211 via bolts.

In actual implementation, the output end 122 of the battery cell group 12 may be bent downward to be connected to the mounting base of the output electrode 15. One end of the rigid aluminum busbar 16 may extend into the mounting base. The bolts sequentially pass through the rigid aluminum busbar 16 and the output end 122 of the battery cell group 12 and are engaged with the threaded holes to form a fitted connection, thereby achieving the connection between the output end 122 of the battery cell 121 and the rigid aluminum busbar 16.

Referring to FIG. 8, according to some embodiments of the present application, the first beam body 13211 may be provided with a concave-convex structure.

In this implementation, the concave-convex structure of the first beam body 13211 is disposed between the flange 13212 and the upper portion of the first beam body 13211, and the shape of the concave-convex structure is determined based on a simulation design. The concave-convex structure may be manufactured by stamping or molding. By arranging the concave-convex structure on the first beam body 13211, the structural strength of the first beam body 13211 is enhanced, and the ability of the expansion beam 132 to bear the expansion force is improved.

Referring to FIG. 8, in some embodiments, the side portion of the second beam body 13213 may be further provided with an extension segment extending in a direction away from the mounting member 131, and the extension segment is configured to be connected to the side wall of the case 11 so as to improve the connection strength between the expansion beam 132 and the case 11, thereby enhancing the overall structural strength.

Referring to FIGs. 8 and 9, according to some embodiments of the present application, the mounting member 131 may include a main plate body 1311, a bent portion 1312, and a support leg 1313.

The first mounting position 1310 may be provided on the main plate body 1311. One end of the bent portion 1312 may be connected to the side portion of the main plate body 1311 in a bending manner, and another end of the bent portion 1312 may be connected to the expansion beam 132 to form an integrated member. The support leg 1313 is connected to the side portion of the main plate body 1311, and the support leg 1313 is configured to be connected to the case 11 of the battery 10.

By providing the main plate body 1311 and arranging the first mounting position 1310 on the main plate body 1311, the assembly of components of the switch box 14 is facilitated. One end of the bent portion 1312 may be connected to the side portion of the main plate body 1311 in a bending manner, to facilitate the connection of another end of the bent portion 1312 to the reinforcing plate 1322 of the expansion beam 132 to form an integrated member.

The support leg 1313 is connected to the side portion of the main plate body 1311, and the support leg 1313 may be manufactured by cutting and bending a metal sheet. The support leg 1313 can be configured to be connected to the case 11 of the battery 10, specifically by welding, thereby enabling a portion of the mounting member 131 to be fixedly connected to the case 11.

Referring to FIGs. 8 and 9, according to some embodiments of the present application, the bent portion 1312 may be bent downward from a side edge of the main plate body 1311 facing the expansion beam 132. The upper end of the support leg 1313 is connected to the main plate body 1311, and the lower end of the support leg 1313 is configured to be connected to the case 11 of the battery 10.

In this implementation, by bending the bent portion 1312 downward and arranging the support leg 1313 on the lower side of the main plate body 1311, the main plate body 1311 is spaced apart from the case 11 of the battery 10. During the assembly process of the switch box 14, components such as a cable tie and a clinch stud may be used. By spacing apart the main plate body 1311 from the case 11 of the battery 10, the assembly operation of the mounting of the switch box 14 on the main plate body 1311 via assembly holes is facilitated, thereby improving production efficiency.

According to some embodiments of the present application, the present application further provides an electric device. The electric device includes the battery 10 according to any one of the above solutions, and the battery 10 is configured to provide electrical energy for the electric device.

The electric device may be any one of the aforementioned devices or systems that use the battery 10.

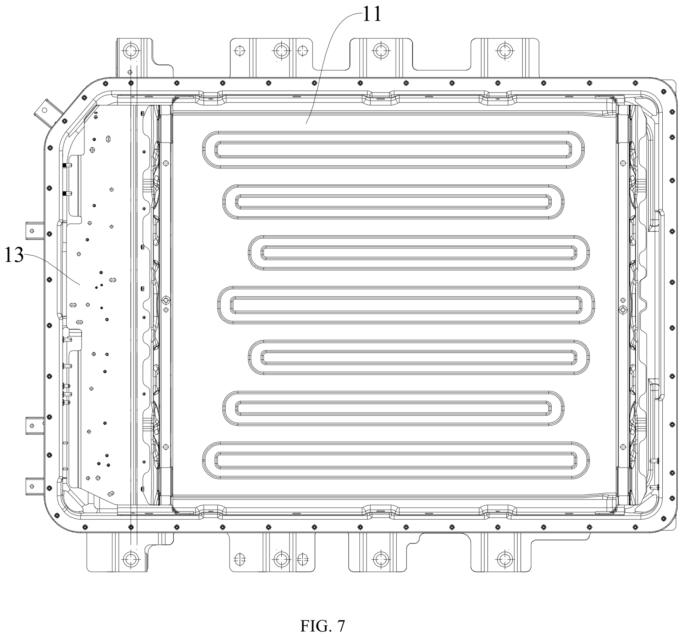

According to some embodiments of the present application, referring to FIGs. 7 to 9, the present application provides a beam structure 13 of the battery 10. The beam structure 13 may include a mounting member 131 and an expansion beam 132.

The mounting member 131 may include a main plate body 1311, a bent portion 1312, and a support leg 1313. The main plate body 1311 is provided with a first mounting position 1310, and the main plate body 1311 is provided with a plurality of assembly holes at the first mounting position 1310 for the assembly of the switch box 14. The bent portion 1312 is connected to a side edge of the main plate body 1311 facing the expansion beam 132 and bent downward from the side edge of the main plate body 1311 facing the expansion beam 132. The support leg 1313 is connected to a side edge of the main plate body 1311 distal to the expansion beam 132, the upper end of the support leg 1313 is connected to the main plate body 1311, and the lower end of the support leg 1313 can be configured to be fixedly connected to the case 11 by welding.

The expansion beam 132 may include a beam body 1321 and a reinforcing plate 1322. The beam body 1321 may include a first beam body 13211 and a second beam body 13213. The first beam body 13211 is disposed on a side of the second beam body 13213 proximal to the mounting member 131. The upper portion of the first beam body 13211 and the upper portion of the second beam body 13213 are bent in a direction close to each other and are connected by welding, such that the first beam body 13211 and the second beam body 13213 jointly define a cavity with an open lower end. The reinforcing plate 1322 includes a first portion 13221 and a second portion 13224 that are connected. The first portion 13221 is disposed within the cavity, the second portion 13224 extends out from the opening at the lower end of the cavity so as to be connected to the bent portion 1312 to form an integrated member, and the second portion 13224 is further configured to be connected to the case 11 by welding. The lower end of the first beam body 13211 is provided with a flange 13212 extending in a direction close to the mounting member 131, and the flange 13212 is located on the upper surface of the second portion 13224 and is connected to the second portion 13224 by welding.

The first portion 13221 includes a plurality of reinforcing segments 13222 and a plurality of supporting segments 13223 that are arranged in an up-down direction. Two adjacent reinforcing segments 13222 are attached and welded to the first beam body 13211 and the second beam body 13213, respectively. The supporting segment 13223 is connected between two adjacent reinforcing segments 13222, and one supporting segment 13223 located at the lowermost end is connected to the second portion 13224.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A beam structure of a battery, comprising:
a mounting member, the mounting member being provided with a first mounting position configured to mount a switch box; and
an expansion beam, the expansion beam being provided with a second mounting position configured to mount a connection terminal of a battery cell group, wherein at least a portion of the expansion beam is connected to the mounting member to form an integrated member.

2. The beam structure of a battery according to claim 1, wherein the expansion beam comprises:
a beam body, the beam body being provided with a cavity, and the second mounting position being provided on the beam body; and
a reinforcing plate, the reinforcing plate being disposed within the cavity and being connected to the beam body,
wherein one of the beam body and the reinforcing plate is connected to the mounting member to form an integrated structure.

3. The beam structure of a battery according to claim 2, wherein the beam body comprises a first beam body and a second beam body, the first beam body is disposed on a side proximal to the mounting member relative to the second beam body, upper portions of the first beam body and the second beam body are connected and jointly define a cavity with an open lower end, a first portion of the reinforcing plate is located within the cavity and connected to the first beam body and the second beam body, and a second portion of the reinforcing plate extends out from the lower end of the cavity so as to be connected to the mounting member to form an integrated member.

4. The beam structure of a battery according to claim 3, wherein the first portion comprises a plurality of reinforcing segments and supporting segments that are arranged in an up-down direction, two adjacent reinforcing segments are connected to the first beam body and the second beam body, respectively, the supporting segment is connected between the two adjacent reinforcing segments, and one of the supporting segments that is located at a lowermost end is connected to the second portion.

5. The beam structure of a battery according to claims 3 and 4, wherein a lower end of the first beam body is provided with a flange extending in a direction close to the mounting member, and the flange is connected to the second portion.

6. The beam structure of a battery according to claim 5, wherein the second portion is provided with a plurality of mounting holes, and the flange is provided with a plurality of clearance grooves at positions corresponding to the plurality of mounting holes.

7. The beam structure of a battery according to claims 3 to 6, wherein an upper end of the first beam body is provided with a first groove, an upper end of the second beam body is provided with a second groove, and the first groove and the second groove define the second mounting position.

8. The beam structure of a battery according to any one of claims 3 to 7, wherein the first beam body is provided with a concave-convex structure.

9. The beam structure of a battery according to any one of claims 1 to 8, wherein the mounting member comprises:
a main plate body, wherein the first mounting position is provided on the main plate body;
a bent portion, wherein one end of the bent portion is connected to a side portion of the main plate body in a bending manner, and another end of the bent portion is connected to the expansion beam to form an integrated member; and
a support leg, wherein the support leg is connected to the side portion of the main plate body, and the support leg is configured to be connected to a case of the battery.

10. The beam structure of a battery according to claim 9, wherein the bent portion is bent downward from a side edge of the main plate body facing the expansion beam, an upper end of the support leg is connected to the main plate body, and a lower end of the support leg is configured to be connected to the case of the battery.

11. A battery, comprising:
a case;
the beam structure according to any one of claims 1 to 10, mounted within the case;
a switch box mounted at the first mounting position;
an output electrode mounted at the second mounting position; and
a battery cell group mounted within the case, wherein a connection terminal of the battery cell group is electrically connected to the switch box via the output electrode.

12. An electric device, comprising:
the battery according to claim 11, wherein the battery is configured to supply power to the electric device.
